# EUROPEAN PATENT SPECIFICATION

(11) **EP 0 674 251 B1**
(45) Date of publication and mention of the grant of the patent: **09.09.1998**
(21) Application number: 95100834.1
(22) Date of filing: 23.01.1995
(51) Int. Cl.: G05D 23/24, B60R 16/02

(54) **An automatic device for reducing the electrical energy-consumption of a heated rear window**
Automatische Einrichtung zur Reduzierung des elektrischen Energieverbrauchs einer beheizten Heckscheibe
Dispositif automatique de réduction de la consommation d'énergie électrique d'une fenêtre arrière chauffante

(30) Priority: 22.03.1994 IT TO940207
(43) Date of publication of application: 27.09.1995
(73) Proprietor: FIAT AUTO S.p.A., 10135 Torino (IT)
(72) Inventor: Di Nunzio, Vittorio, I-10139 Torino (IT)
(74) Representative: Serra, Francesco

(56) References cited:
- EP-A- 0 339 407
- WO-A-90/02670
- DE-A- 4 106 205
- US-A- 3 646 354

## Description

The present invention relates to an automatic device for reducing the electrical energy-consumption of a heated rear window.

It is known that, because of the ever-increasing numbers of electrical devices installed in modern vehicles the energy-demands on the alternator of the vehicle have increased enormously in comparison with those of a few years ago, to the point that alternators giving more than 120 amperes are used in some motor vehicles.

On the one hand, the foregoing penalises the alternator in terms of cost and weight, whereas, on the other hand, it leads to an increase in fuel-consumption since the alternator is driven, by belt-and-pulley means, by the internal combustion engine which, in the final analysis, has to burn additional fuel to enable the alternator to supply the electrical energy necessary for the electrical equipment installed.

Clearly therefore, in order both to provide lower-powered alternators for a given energy balance, and to limit fuel consumption, careful management of the electrical equipment on board is necessary, so as to avoid wastage of electrical energy which could not be noticed by the user, naturally without a deterioration in the type of service given.

A typical case of energy wastage is the use of the heated rear window; in fact, its electrical power is calculated on the basis of its most onerous working condition; that is, its power has to be such that it can melt a certain thickness of ice present on the rear window within a certain period of time, typically from 6 to 10 minutes.

Once the melting has taken place, however, the power used to prevent the formation of new ice or to keep the glass demisted is excessive, since 30-60% of the maximum power is sufficient.

In systems which do not provide for any control of the power supplied to the rear window since it is regulated simply by a corresponding push-button operable by the user, which systems, moreover, are very widespread, the rear window inevitably remains switched on for longer than necessary; once switched on, when the car is first started, it thus often remains on throughout the journey with a wastage of electrical energy and hence of fuel, and sometimes with the battery in a low charge state since it has not been able to make use of the energy used for the rear window.

It can thus be appreciated why, particularly in medium/top range cars, there are means for optimizing the electrical power of the rear window.

Some of these, which are quite sophisticated, provide for humidity sensors, ice sensors, etc., which automatically activate/de-activate the device controlling the rear window, which is generally a relay of suitable power.

Others are based on the level of the battery voltage or on the rate of revolution of the engine and activate/de-activate the relay controlling the rear window by means of suitable timing; their operation is regulated by the appropriate push-button operable by the user.

Finally, others are simple timing devices which are activated by means of the usual push-button and which switch off automatically when a period of time (typically 10-15 minutes) has elapsed.

The first means mentioned are obviously expensive, whereas the cost of the others is less, but is still appreciable.

The object of the present invention is to provide an automatic device for reducing the electrical energy-consumption of a heated rear window, which avoids the aforementioned problems, permits simple but efficient regulation of the electrical energy-consumption, is easy to construct, and is of low cost.

The present invention achieves the aforementioned objects by virtue of an automatic device for reducing the electrical energy-consumption of a heated rear window having the specific characteristics recited in the following claims.

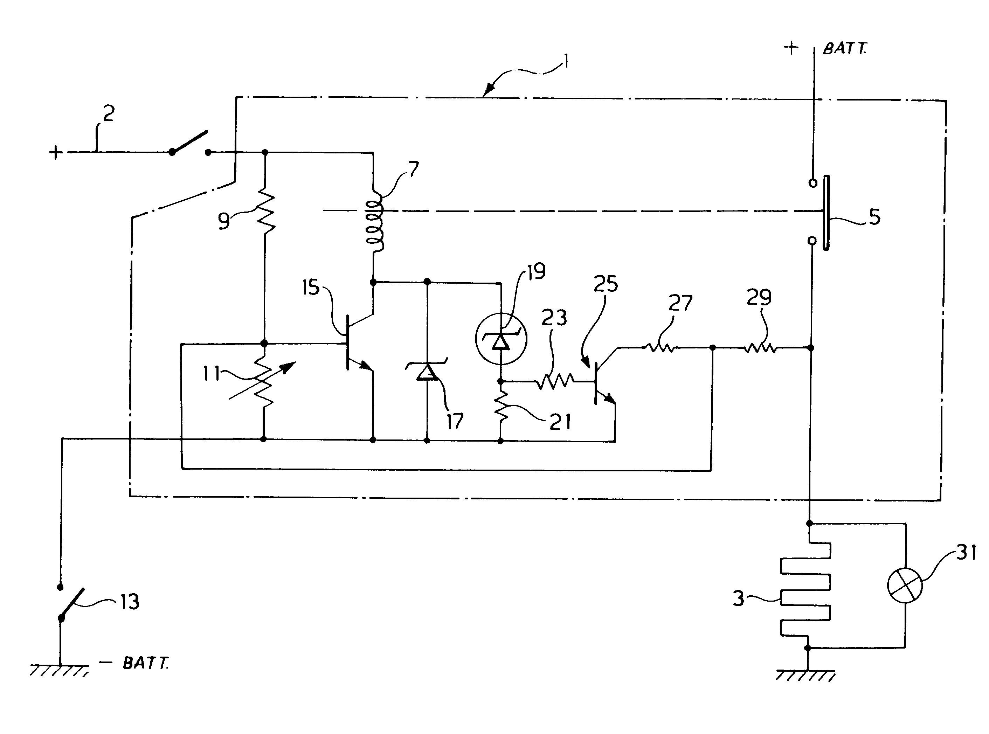

The invention will now be described, purely by way of non-limiting example, with reference to the appended drawing, in which the casing of the device of the present invention is schematically and generally indicated 1.

The casing 1 receives the signal (open or closed) from the ignition-key contact 2 which is connected to the positive pole of the battery, not shown.

A heated rear window 3 is connected at one end to the negative pole of the battery, and at the other end is connectible to the positive pole of the battery with the interposition of a relay constituted by a movable device 5 controlled by a coil 7.

A first end of the coil 7 is connected to the ignition-key contact, which is connected to the first end of a resistor 9, the second end of which is connected to the first end of a resistor 11, the second end of which is connected to the negative pole of the battery with the interposition of a switch 13 for operating the heated rear window; the resistor 11 is of the NTC (negative temperature coefficient) type, that is, it is a device the resistance of which varies inversely with its temperature, that is, the resistance decreases more than linearly with increases in the temperature, and vice versa.

The base of a transistor 15 is connected between the resistors 9 and 11; the collector of the transistor 15 is connected to the second end of the coil 7 and its emitter is connected to the switch 13.

A first zener diode 17 is connected between the collector of the transistor 15 and the switch 13 with its cathode facing towards the emitter of the transistor 15.

Connected in parallel with the first zener diode 17, there is a series comprising a second zener diode 19 with its cathode connected to the collector of the transistor 15 and its anode connected to a first end of a resistor 21, the second end of which is connected to the emitter of the transistor 15.

A resistor 23 connected between the zener diode 19 and the resistor 21 is connected to the base of a transistor 25, the emitter of which is connected to the emitter of the transistor 15, and the collector of which is connected to a resistor 27, which is connected to a resistor 29, which is connected to the positive pole of the heated rear window 3. The connecting point between the base of the transistor 15 and the resistors 9 and 11 is connected to an intermediate point between the resistors 27 and 29.

An indicator lamp 31, which is normally disposed on the dashboard (not shown) is in parallel with the heated rear window 3 in order to indicate when it is switched on as a result of the operation of the switch 13.

The device of the invention operates as follows. It is assumed that the device has not been operated for quite a long time and is therefore at ambient temperature, and that the same can be said of the casing 1.

When the key contact 2 is switched on and the switch 13 is closed in order to switch on the heated rear window, the voltage signal at the base of the transistor 15 is high enough to cause the immediate energization of the relay and the corresponding switching-on of the rear window; that is, the transistor 15 is conductive, a current flows through the coil 7, and the movable device 5 is attracted towards the coil 7, closing the contact between the positive pole of the battery and the heated rear window, through which current flows, and which is heated by the joule effect; at the same time, the indicator lamp 31 is lit.

Starting from this moment, the temperature within the casing 1 rises taking several minutes, typically from 6 to 12 minutes, depending on the ambient temperature, in the sense that the lower the ambient temperature, the longer the period of time for which the device is initially switched on. When the temperature within the casing 1 has reached a certain value, typically 80-90°C, the resistance of the resistor 11 has fallen to a value such that the control of the base of the transistor 15 becomes insufficient to keep it conductive and the relay is thus de-energized and the rear window is switched off.

Starting from this moment, the device and its casing 1 cool until they reach another certain temperature value, typically 50-60°C, at which the resistance of the resistor 11 has risen to a value such as to make the transistor 15 conductive again and hence to energize the relay and consequently switch the rear window on again.

The device thus starts to cycle with a period which is variable according to the position in which the device is mounted on the vehicle and to environmental conditions, with a cycle of between 3 and 15 minutes, and with on/off times which are also variable for the reasons given above and which correspond to a duty ratio of between, for example, 30 and 60%.

The device therefore brings about a first protracted switched-on period in order to have maximum de-icing efficiency in the worst conditions, and subsequent cycling which is more than adequate to keep the rear window demisted, thus saving from 40 to 70% of the electrical energy consumed in comparison with continuous operation. The zener diode 17 protects the transistor 15, preventing excess voltages and reversals of polarity.

The circuit constituted by the zener diode 19, the resistors 21, 23, the transistor 25 and the resistor 27 accelerates the cutting-off of the transistor 15.

The resistor 29 connected to the output of the power contact 5 of the relay has the purpose of forcing the transistor 15 to become conductive as soon as the contact 5 closes.

The resistors 27 and 29 also have the function of bringing about hysteresis in the control signal and consequently the two desired temperature levels for the switching on/off of the rear window.

The advantages of the device of the present invention are clear from the foregoing; the circuit just described can be formed on a very small board by virtue of the availability of SMD components (surface mounting devices); the board is connected within the control relay which has standard dimensions and is thus fully interchangeable with the normal relay produced for controlling the heated rear window.

Naturally, the principle of the invention remaining the same, the details of construction and forms of embodiment may be varied widely with respect to those described and illustrated, without thereby departing from the scope of the present invention.

In particular, all the components indicated, or other equivalent components suitable for performing the same functions and for being integrated on a silicon substrate, can be integrated in a single customized circuit to provide a single electronic component which can be soldered near the coil 7 and in series therewith.

## Claims

1. An automatic device for reducing the electrical energy-consumption of a heated rear window (3) in a motor vehicle in which a relay (7, 5) housed in a casing (1) and constituted by a control coil (7) and a movable device (5) enables the heated rear window (3) to be supplied by the battery of the motor vehicle as a result of the operation of a switch 13, characterized in that, associated with the relay (7, 5), in the same casing (1), there is an electronic control circuit (9, 11, 15) comprising an electronic resistance element (11), the resistance of which is sensitive to temperature and which is provided to either enable or prevent the energization of the relay (7, 5) in dependence on the temperature within the casing (1) by making a first transistor (15) either conductive or cutting it off.

2. A device according to Claim 1, characterized in that the electronic control circuit (9, 11, 15) comprises first and second resistors (9, 11) connected in series between the positive pole and the negative pole of the battery, the first resistor (9) being in parallel with the control coil (7) of the relay (7, 5) a first end of which is connectible to the positive pole of the battery, the base of the transistor (15) being connected between the resistors (9, 11), the collector of the first transistor (15) being connected to the second end of the control coil (7) and its emitter being connectible to the negative pole of the battery.

3. A device according to Claim 1 or Claim 2, characterized in that the electronic resistance element (11) has an ohmic resistance which is inversely proportional to its temperature.

4. A device according to any one of claims 2 or 3, characterized in that it comprises a first zener diode (17) between the collector of the first transistor (15) and the negative pole of the battery.

5. A device according to the preceding claim, characterized in that it comprises a second zener diode (19) and a third resistor (21) connected in series between the collector of the first transistor (15) and the negative pole of the battery, a fourth resistor (23) being connected between the second zener diode (19) and the third resistor (21); the resistor fourth (23) being connected to the base of a second transistor (25) whose emitter is connected to the negative pole of the battery and the collector is connected to a fifth resistor (27) connected in series with a sixth resistor (29) which is connected in turn to the end of the heated rear window (3) which is connectible to the positive pole of the battery, the connection point between the base of the first transistor (15) and the first and second resistors (9, 11) being connected to an intermediate point between the fifth and sixth resistors (27, 29).

## Patentansprüche

1. Automatische Vorrichtung, um den Verbrauch an elektrischer Energie für eine geheizte Heckscheibe (3) in einem Kraftfahrzeug herabzusetzen, wobei ein Relais (7, 5), das in einem Gehäuse (1) untergebracht ist und von einer Steuerspule (7) und einem bewegbaren Element (5) gebildet wird, ermöglicht, daß die geheizte Heckscheibe (3) von der Batterie des Kraftfahrzeugs infolge der Betätigung eines Schalters (13) angespeist wird, dadurch gekennzeichnet, daß dem Relais (7, 5) im selben Gehäuse (1) eine elektronische Steuerstufe (9, 11, 15) zugeordnet ist, die ein elektronisches Widerstandselement (11) enthält, dessen Widerstandswert temperaturabhängig ist, und das dazu dient, um entweder das Relais (7, 5) in Abhängigkeit von der Temperatur im Gehäuse (1) dadurch zu erregen oder eine Erregung zu verhindern, daß ein erster Transistor (15) entweder leitet oder gesperrt ist.

2. Vorrichtung gemäß Anspruch 1, dadurch gekennzeichnet, daß die elektronische Steuerstufe (9, 11, 15) einen ersten und zweiten Widerstand (9, 11) enthält, die zwischen dem positiven Pol und dem negativen Pol der Batterie in Serie geschaltet sind, wobei der erste Widerstand (9) parallel zur Steuerspule (7) des Relais (7, 5) liegt, von dem ein erstes Ende mit dem positiven Pol der Batterie verbunden werden kann, wobei die Basis des Transistors (15) zwischen den Widerständen (9, 11) liegt, wobei der Kollektor des ersten Transistors (15) mit dem zweiten Ende der Steuerspule (7) verbunden ist und sein Emitter mit dem negativen Pol der Batterie verbunden werden kann.

3. Vorrichtung gemäß Anspruch 1 oder 2, dadurch gekennzeichnet, daß das elektronische Widerstandselement (11) einen ohmschen Widerstand besitzt, der seiner Temperatur umgekehrt proportional ist.

4. Vorrichtung gemäß irgendeinem der Ansprüche 2 oder 3, dadurch gekennzeichnet, daß die Vorrichtung eine erste Zenerdiode (17) enthält, die zwischen dem Kollektor des ersten Transistors (15) und dem negativen Pol der Batterie liegt.

5. Vorrichtung gemäß dem obigen Anspruch, dadurch gekennzeichnet, daß die Vorrichtung eine zweite Zenerdiode (19) sowie einen dritten Widerstand (21) enthält, die zwischen dem Kollektor des ersten Transistors (15) und dem negativen Pol der Batterie in Serie geschaltet sind, wobei ein vierter Widerstand (23) zwischen der zweiten Zenerdiode (19) und dem dritten Widerstand (21) liegt; wobei der vierte Widerstand (23) mit der Basis eines zweiten Transistors (25) verbunden ist, dessen Emitter am negativen Pol der Batterie liegt und dessen Kollektor mit einem fünften Widerstand (27) verbunden ist, der mit einem sechsten Widerstand (29) in Serie geschaltet ist, der seinerseits an jenem Ende der geheizten Heckscheibe (3) liegt, das mit dem positiven Pol der Batterie verbunden werden kann, wobei der Verbindungspunkt zwischen der Basis des ersten Transistors (15) sowie dem ersten und zweiten Widerstand (9, 11) an einem Zwischenpunkt zwischen dem fünften und sechsten Widerstand (27, 29) liegt.

## Revendications

1. Dispositif automatique de réduction de la consommation d'énergie électrique d'une fenêtre arrière chauffante (3) dans un véhicule à moteur, dans lequel un relais (7, 5) logé dans un boîtier (1) est constitué par un bobinage de commande (7) et un dispositif mobile (5) permet l'alimentation de la fenêtre arrière chauffante (3) par la batterie d'accumulateurs du véhicule à moteur à la suite de la manoeuvre d'un interrupteur (13), caractérisé en ce que, en association avec le relais (7, 5) et dans le même boîtier (1) est placé un circuit électronique de commande (9, 11, 15) qui comprend un élément électronique résistif (11) dont la valeur de résistance est sensible à la température et qui est destiné à permettre ou empêcher l'alimentation du relais (7, 5) suivant la température dans le boîtier (1) par mise à l'état conducteur ou non conducteur d'un premier transistor (15).

2. Dispositif selon la revendication 1, caractérisé en ce que le circuit de commande électronique (9, 11, 15) comprend une première et une seconde résistance (9, 11) connectées en série entre le pôle positif et le pôle négatif de la batterie d'accumulateurs, la première résistance (9) étant montée en parallèle avec le bobinage de commande (7) du relais (7, 5) dont une première extrémité peut être connectée au pôle positif de la batterie d'accumulateurs, la base du transistor (15) étant connectée entre les résistances (9, 11), le collecteur du premier transistor (15) étant connecté à la seconde extrémité du bobinage de commande (7) et son émetteur pouvant être connecté au pôle négatif de la batterie d'accumulateurs.

3. Dispositif selon la revendication 1 ou 2, caractérisé en ce que l'élément résistif électronique (11) a une résistance ohmique qui varie en proportion inverse de sa température.

4. Dispositif selon l'une des revendications 2 ou 3, caractérisé en ce qu'il comprend une première diode de Zener (17) placée entre le collecteur du premier transistor (15) et le pôle négatif de la batterie d'accumulateurs.

5. Dispositif selon la revendication précédente, caractérisé en ce qu'il comprend une seconde diode de Zener (19) et une troisième résistance (21) connectées en série entre le collecteur du premier transistor (15) et le pôle négatif de la batterie d'accumulateurs, une quatrième résistance (23) étant connectée entre la seconde diode de Zener (19) et la troisième résistance (21), la quatrième résistance (23) étant connectée à la base du second transistor (25) dont l'émetteur est connecté au pôle négatif de la batterie d'accumulateurs et le collecteur est connecté à une cinquième résistance (27) connectée en série avec une sixième résistance (29) qui est connectée à son tour à l'extrémité de la fenêtre arrière chauffante (3) qui peut être connectée au pôle positif de la batterie d'accumulateurs, le point de connexion entre la base du premier transistor (15) et les première et seconde résistances (9, 11) étant connectée à un point intermédiaire entre les cinquième et sixième résistances (27, 29).
